(19) Europäisches Patentamt / European Patent Office / Office européen des brevets

(11) **EP 1 405 097 B1**

(12) **EUROPÄISCHE PATENTSCHRIFT**

(45) Veröffentlichungstag und Bekanntmachung des Hinweises auf die Patenterteilung:
**17.08.2011   Patentblatt 2011/33**

(51) Int Cl.:
***G01S 7/487*** *(2006.01)*   ***G01S 17/89*** *(2006.01)*
***F41G 3/14*** *(2006.01)*

(21) Anmeldenummer: **02748742.0**

(22) Anmeldetag: **07.06.2002**

(86) Internationale Anmeldenummer:
**PCT/EP2002/006239**

(87) Internationale Veröffentlichungsnummer:
**WO 2003/005057 (16.01.2003 Gazette 2003/03)**

(54) **VERFAHREN UND VORRICHTUNG ZUR UNTERDRÜCKUNG ELEKTROMAGNETISCHER HINTERGRUNDSTRAHLUNG IN EINEM BILD**

METHOD AND DEVICE FOR SUPPRESSING ELECTROMAGNETIC BACKGROUND RADIATION IN AN IMAGE

PROCEDE ET DISPOSITIF POUR SUPPRIMER LE RAYONNEMENT ELECTROMAGNETIQUE DE FOND D'UNE IMAGE

(84) Benannte Vertragsstaaten:
**AT BE CH CY DE DK ES FI FR GB GR IE IT LI LU MC NL PT SE TR**

(30) Priorität: **06.07.2001   EP 01116378**

(43) Veröffentlichungstag der Anmeldung:
**07.04.2004   Patentblatt 2004/15**

(73) Patentinhaber: **Leica Geosystems AG
9435 Heerbrugg (CH)**

(72) Erfinder: **KIRSCHNER, Holger
CH-9435 Widnau (CH)**

(74) Vertreter: **Kaminski, Susanne
Kaminski Harmann Patentanwälte Est
Austrasse 79
9490 Vaduz (LI)**

(56) Entgegenhaltungen:
**EP-A- 0 924 536       EP-A- 1 008 831
EP-A1- 1 273 928     WO-A-00/55602
US-A- 5 351 117       US-A- 5 673 082
US-A- 5 684 531       US-A- 5 901 236**

**Beschreibung**

Die Erfindung betrifft Verfahren zur Unterdrükkung elektromagnetischer Hintergrundstrahlung in einem Bild nach dem Oberbegriff des Anspruchs 1, eine Vorrichtung zur Durchführung des Verfahrens nach dem Oberbegriff des Anspruchs 6, ein Messgerät nach Anspruch 9, sowie eine Verwendung der Vorrichtung zur Identifikation eines Lasersignals als Markierung für nachfolgende Messprozesse als auch zur Identifikation einer Quelle eines Lasersignals.

Die Detektion einzelner Signale oder vollständiger Signaturen elektromagnetischer Strahlung besitzt ein breites Anwendungsfeld. Dabei können zwei grundsätzliche Aufgaben unterschieden werden.

Zum einen soll eine Strahlungsquelle (Zielquelle) bzw. deren reelles oder virtuelles Bild erkannt und ihre Position bzw. ihre Richtung bestimmt werden. Anwendungsbereiche bestehen hier z.B. in der automatischen Ausrichtung von Messgeräten oder der Erkennung von Strahlungsquellen im militärischen Bereich (beispielsweise zur Erkennung einer gegnerischen Zielbeleuchtung oder Entfernungsmessung, als Bestandteil eines aktiven Schutz-Systems). Andere Anwendungsbereiche stellen die Verfolgung von Laserstrahlung zur Steuerung von autonomen Fahrzeugen oder die Erkennung und Verfolgung von astronomischen Objekten dar. Die emittierte Strahlung kann dabei grundsätzlich ein kontinuierliches oder ein Linienspektrum aufweisen. Allerdings erfordert die Erkennung einer Quelle Informationen über deren spektrale Charakteristik, die zwar relativ konstant sein können, beispielsweise für Laser, für thermische Strahler aber aufgrund der temperaturabhängigen Emission grösseren Unsicherheiten unterworfen sind.

Zum anderen soll die Position von Objekten durch Markierungen erkennbar gestaltet werden (Zielbeleuchtung), beispielsweise mit einem Lichtfleck oder einem Reflektor, der bei divergenter Bestrahlung aufgrund seiner hohen Reflektivität detektierbar ist. So kann zum Beispiel im geodätischen Bereich zu Vermessungszwecken die Position von reflektierenden Punkten, die z.B. über Prismenreflektoren, Corner-Cubes oder Reflektorfolien verfügen, präzise ermittelt werden. Dazu sendet man ein Lasersignal aus (Zielbeleuchtung) und bestimmt die Richtung, aus der eventuell reflektierte Strahlung kommt. Hierdurch ist es möglich, spezielle Punkte, beispielsweise an Maschinen oder Gebäuden, durch Anbringen eines Reflektors zu markieren oder markierbar zu gestalten und ihre Position automatisiert zu messen.

In geodätischen Anwendungen wird beispielsweise eine Suche mittels Laserspot verwendet, um mit einem Theodoliten die Richtung zu bestimmen, in der sich ein Reflektor (Prismenanordnung) befindet. Dazu wird von einem Theodoliten ein Lasersignal ausgesendet. Trifft dieses Signal auf ein Reflektorprisma, so wird der Laserstrahl zurückreflektiert und kann im Theodoliten wieder empfangen werden. Einen ähnlichen Anwendungsbereich stellt die Führung von automatischen Robotersystemen durch Lichtmarkierungen oder reflektierenden Markierungen im Produktionsbereich dar.

Probleme bei der Detektion und Positionsbestimmung von elektromagnetischen Signalen bereitet vor allem eine existente Störstrahlung, wie z.B. die Hintergrundstrahlung des Taghimmels, direkte Sonneneinstrahlung, die Innenbeleuchtung von Räumen oder thermische Strahler wie z.B. metallische Schmelzen bei industriellen Anwendungen.

Solche Störstrahlung kann bei ungünstigen Abstandsverhältnissen stärker als das zu messende Signal sein. Insbesondere für die Verwendung von Lasern als Signalquellen ergeben sich Probleme, da deren Leistung aus Sicherheitsgründen, vor allem zum Schutz des menschlichen Auges, bestimmte Werte nicht überschreiten darf.

Der Einfluss der Störstrahlung wird bei Verfahren des Stands der Technik durch eie Hell/Dunkel-Differenzbildmethode eliminiert. Dazu wird eine Messung mit eingeschalteter Signalquelle (Zielquelle oder Zielbeleuchter) und eine weitere Messung bei ausgeschalteter Signalquelle durchgeführt. Aus dem Unterschied beider Messungen kann das Signal, z.B. ein Laserpunkt oder die von einer reflektierenden Markierung zurückkommende Strahlung, extrahiert werden.

Eine entsprechende Vorrichtung ist als Kamerasystem mit lichtgesteuerter Entfernungsmessung für Tele-Robotikapplikationen aus den Patentschriften US 5,673,082 und 5,684,531 bekannt. Durch das Kamerasystem werden Bilder mit einem ein- und ausgeschalteten Laser aufgenommen. Ein pixelweise durchgeführter Vergleich der Bilder, bei dem identische Pixel aus dem Bild eliminiert werden, führt zu einem Differenzbild, das lediglich den Laserpunkt beinhalten soll.

Die Patentschrift US 5,901,236 beschreibt ein Verfahren und eine Vorrichtung zur Positionsmessung durch Bildverarbeitung. Hierbei wird ein zu vermessendes Objekt mit einer lichtemittierenden Quelle, z.B. einer lichtemittierenden Diode (LED) versehen, die periodisch ein- und ausgeschaltet wird. Von dem Objekt werden vier aufeinanderfolgende Bilder mit einer Belichtungszeit von einem Viertel der Periode der lichtemittierenden Quelle aufgenommen und jeweils aus dem ersten und dritten und dem zweiten und vierten Bild Differenzbilder erzeugt. Das Differenzbild mit der grössten Helligkeit wird zur Positionsbestimmung verwendet. Durch dieses Vorgehen soll gewährleistet werden, dass für mindestens eines der beiden Differenzbilder die ein- und ausgeschalteten Zustände voneinander subtrahiert werden.

Aus der US 5,351,117 ist ein Verfahren zur Identifizierung von Edelsteinen bekannt, bei dem auf die Hintergrundintensität in einem Bild geschlossen wird, indem basierend auf zwei flankierenden Messungen in benachbarten Wellenlängenbereichen die Hintergrundintensität linear abgeschätzt wird.

Zur genauen Positionsbestimmung in Abständen von mehr als 50m erfordern bekannte Verfahren die Verwendung einer Anordnung (Array) mehrerer Sensoren für die Detektion. Beispiele für solche Sensorarrays sind Flächensensoren wie CCD- oder CMOS-Kamerasensoren und Zeilensensoren auf CMOS-oder CCD-Basis. Durch eine Optik wird auf dem Sensorarray ein Bild eines auszuwertenden Raumbereichs (Gesichtsfeld) erzeugt, das vom Sensorarray in ein Signal umgewandelt wird.

Ist ein zu detektierendes Signal im Gesichtsfeld vorhanden, wird dieses, z.B. als heller Punkt eines Laserspots, im Bild registriert. Im Gegensatz zu Einzelsensoren, z.B. Position Sensitive Device (PSD) (flächenhaft gestaltete Dioden, die die Position des Schwerpunktes eines auf ihre Sensorfläche auftreffenden Lichtstrahles ermitteln), verteilt sich bei Sensorarrays die, gegebenenfalls von der gesamten Umgebung, einfallende Störstrahlung auf eine Vielzahl von Teilsensoren (Pixel) des Arrays. Durch diese Aufteilung ergibt sich ein kleineres Störsignal und damit ein verbessertes Signal/Rausch-Verhältnis. Dadurch wird die Zuverlässigkeit der Signalerkennung erhöht und die Ortsauflösung der Positionsbestimmung vergrößert. Zudem wird bei Einzelsensoren durch intensive Störstrahlung die Dynamik des Sensors überschritten und damit eine Messung unmöglich. Beispielsweise wird das Erfassen der Sonne im Bildausschnitt schnell zur Übersättigung des Sensors führen.

Der erhöhten Ortsauflösung von Sensorarrays steht jedoch der Nachteil eines im Vergleich zu Einzelsensoren deutlich erhöhten Zeitbedarfs für eine Messung gegenüber. Dieser vergrößerte Zeitbedarf ist auf die zahlreichen bei einer Messung auszuwertenden Teilsensoren des Sensorarrays zurückzuführen.

Soll eine Ortsgenauigkeit im Sub-10-Winkelsekunden-Bereich erzielt werden, so folgt hierdurch ein unteres Limit für die Anzahl von Einzelsensoren im Sensorarray, bei vorgegebener konstanter Größe des Gesichtsfelds. Aus dafür geeigneten Sensorarrays des unteren bis mittleren Preissegments können teilweise weniger als 200 Bilder pro Sekunde ausgelesen werden.

Aus dieser vergleichsweise hohen Messzeit ergibt sich bei Verwendung der Hell/Dunkel-Differenzbildmethode das Problem der Veränderung einer zu betrachtenden Umgebung während der Messzeit.

Beispielsweise beeinflussen atmosphärische Turbulenzen während der Messzeit die scheinbare Position von entfernt liegenden Objekten maßgeblich. Außerdem kann es wünschenswert sein, während des Messvorgangs mit der Messanordnung Scanbewegungen auszuführen, um einen größeren Richtungsbereich auszuwerten zu können. Auch hierdurch wird eine schnelle Änderung des Bildinhalts bewirkt. Zudem können sich bewegende Störobjekte, z.B. fahrende Kraftfahrzeuge, den Bildinhalt während des Messvorgangs stark verändern.

Verändert sich der Bildinhalt, abgesehen von dem zu analysierenden Signal, zwischen Hellbild und Dunkelbild maßgeblich, so kann aus dem Unterschied der beiden Bilder das Signal nicht mehr fehlerfrei extrahiert werden. Aus diesem fehlerhaften Signal ergeben sich wiederum Fehler bei der Detektion und bei der Bestimmung der Signalposition.

Die Erfindung besitzt somit die Aufgabe, ein Verfahren und eine Vorrichtung bereit zu stellen, durch die eine Erkennung und Positionsbestimmung eines elektromagnetischen Signals in einem betrachteten Gesichtsfeld verbessert wird.

Zudem besteht eine weitere Aufgabe darin, eine sichere und zuverlässige Identifizierung des Signals auch bei starkem oder sich bewegendem Störstrahlungshintergrund oder bei schnellen Veränderungen des Gesichtsfeldes zu gewährleisten.

Diese Aufgaben werden erfindungsgemäss durch die kennzeichnenden Merkmale der Ansprüche 1 bzw. 6 gelöst. Vorteilhafte und alternative Ausgestaltungen und Weiterbildungen des Verfahrens und der Vorrichtung ergeben sich aus den Merkmalen der Unteransprüche.

Der Erfindung liegt die Idee zugrunde, zur Extraktion des Signals in einem Differenzbildverfahren zwei gleichzeitig oder mit hinreichend geringem Zeitabstand aufgenommene Bilder unterschiedlicher Spektralbereiche zu verwenden, die als Positiv-Bild (P-Bild) bzw. Negativ-Bild (N-Bild) bezeichnet werden. Dabei beinhaltet das Negativ-Bild (N-Bild) allgemein die Information, die zur Extraktion des Signals aus dem P-Bild benötigt wird. Damit ist das Negativ-Bild nicht notwendigerweise spiegelverkehrt zum Gegenstand der Autnahme und auch nicht unbedingt hinsichtlich der Hell-Dunkel-Charakteristik invertiert.

Die Wellenlängenselektivität bei der Aufnahme der Bilder wird im weiteren vorzugsweise durch die Verwendung von spektralen Filtern beschrieben, sie kann aber auch durch ein direktes, selektives Ansprechvermögen, beispielsweise durch den Einsatz von entsprechenden Halbleitermaterialien als Sensormaterial, erreicht werden. Insbesondere sind dabei Sensorarrays eingeschlossen, bei denen jeder Einzelsensor in der Lage ist, gleichzeitig getrennte Aussagen über verschiedene spektrale Bereiche zu treffen. Des weiteren wird ein Laserspot (Ziellaser) rein exemplarisch als zu detektierendes Signal beschrieben.

Ein erstes Bild, das im weiteren als P-Bild bezeichnet werden soll, wird mit einem spektralen Filter aufgenommen, welcher vor allem die Ziellaserwellenlänge passieren lässt. Hintergrundstrahlung von Fremdquellen wird durch den Filter zwar abgeschwächt, kann aber in der Regel nicht ganz eliminiert werden. Dies gilt insbesondere für breitbandige, thermische Strahler, wie z.B. die Sonne oder Glühlampen, aber auch für Störstrahler mit Linienspektrum, welche Spektrallinien in der Nähe der Wellenlänge des Ziellasers besitzen.

Beispiele für Störstrahler mit Liniencharakteristik sind die zur Beleuchtung verwendeten Gasentladungs- und Leuchtstoffröhren oder das Vorhandensein von Laserquellen zusätzlich zum Ziellaser.

Für ein zweites Bild, das hier im weiteren als N-Bild bezeichnet wird, erfolgt ein Ausschluss der Wellenlänge des Laserlichts von der Abbildung. Für die genaue Charakteristik eines dafür verwendeten spektralen Filters gibt es mehrere Möglichkeiten, die mit der jeweils zu wählenden Methode einer Hintergrundermittlung verbunden sind und die weiter unten detailliert dargestellt werden. In allen Fällen wird dabei aber das Prinzip verwendet, dass die spektral schmalbandige Laserstrahlung nur im P-Bild zu einer Abbildung des Laserspots führt, d.h. die spektrale Transmission für das Laserlicht nur beim zum P-Bild gehörigen Filter gegeben ist. Aus dem Unterschied zwischen P-Bild und N-Bild kann, ähnlich wie beim Hell/Dunkel-Differenzbild, der Laserspot von der Hintergrundstrahlung unterschieden werden.

Im Unterschied zum Hell/Dunkel-Differenzbild des Stands der Technik ergeben sich jedoch beim spektralen Differenzbild keine Probleme bei schnell veränderlicher Umgebung, da die beiden Bilder exakt zur selben Zeit belichtet werden können und die Auslesegeschwindigkeit der Daten nicht mehr zeit-Kritisch ist.

Die folgende Darstellung berücksichtigt exemplarisch und aus Gründen der Einfachheit die gleichzeitige Aufnahme von zwei Bildern, das Verfahren kann jedoch auch durchaus mit einer grösseren Zahl von Aufnahmen, d.h. sowohl P- als auch N-Bildern, durchgeführt werden, wobei diese gleichzeitig oder hinreichend zeitnah zueinander aufgenommen werden.

Das Sensorarray wandelt die Intensitätsverteilung in ein Signal um, welches zur besseren Unterscheidbarkeit (zum Beispiel vom Ziellaser-Signal) im weiteren als Bild bezeichnet wird. Je nach Aufbau des Sensorarrays werden also eindimensionale Bilder (Zeilensensor) oder mehrdimensionale Bilder (z.B. Flächensensoren) aufgenommen, so dass der Begriff Bild nicht auf durchgängig zweidimensionale Abbildungen beschränkt ist. Das Verfahren kann allgemein auch für andere Sensorgeometrien, wie z.B. lineare Anordnungen von Detektorkomponenten, verwendet werden. In diesem Beispiel kann die Position eines Lichtpunktes ermittelt werden, indem das zweidimensionale Bild über eine Zylinderlinse auf ein eindimensionales Array abgebildet wird. In Kombination mit einer um 90° verdrehten Abbildung können dann die Koordinaten des Lichtpunktes auch mit linearen Anordnungen extrahiert werden.

Der Begriff der Aufnahme eines Bildes soll hier auch eine Bearbeitung des Bildes vor der verfahrensgemässen Verwendung des Bildes beinhalten.

Das P-Bild wird spektral schmalbandig für einen Bereich aufgenommen, der den Bereich um die Laserfrequenz abdeckt. Die Breite des dabei verwendeten Bandpassfilters, der im weiteren als Positivfilter bezeichnet wird, wird limitiert durch die Devicestreuung und die Temperaturdrift der Laserstrahlung. Sollen Lichtpunkte breitbandiger Quellen erfasst werden, so wird eine möglichst genaue Kenntnis des spektralen Verlaufs der Emission erforderlich sein, um ein möglichst gutes Verhältnis von Signal zu Hintergrund ableiten zu können.

Beim N-Bild wird die Ziellaserstrahlung durch einen spektralen Filter, der im weiteren als Negativfilter bezeichnet wird, von der Abbildung ausgeschlossen, so dass die Intensität bzw. Bildhelligkeit eines Ausschnitts des Hintergrundes ohne Ziellaserstrahlung gemessen wird. Messtechnisch wird die Bildhelligkeit erfasst, die zum Integral der spektralen Intensitätsverteilung über den erfassten Wellenlängenbereich in (oft näherungsweise linearem) Zusammenhang steht. Dieser physikalische Zusammenhang zwischen Intensität und Bildhelligkeit wird im folgenden bei der Beschreibung des Verfahrens und insbesondere bei der Ableitung oder Abschätzung der Bildhelligkeit des Hintergrundes im P-Bild vorausgesetzt. Wird die spektrale Intensität des erfassten Ausschnittes durch das Sensorsignal approximiert, so kann im folgenden die Bildhelligkeit sinngemäss auch durch den Begriff der Intensität ersetzt werden.

Aus der im N-Bild gemessenen Bildhelligkeit bzw. Intensität- oder Intensitätsverteilung kann auf die Helligkeit bzw. Intensität des Hintergrundes im P-Bild geschlossen werden. Hierzu werden, je nach vorliegender Problemstellung, verschiedene Verläufe der spektralen Intensitätsverteilung der Störstrahlung als Grundlage angenommen.

Solche Spektren der Störstrahlung können entweder auf der Basis physikalischer Modelle, z.B. für einen Planckschen Strahler oder eine Laserstrahlung, berechnet werden oder auch bei konstanten Verhältnissen direkt vermessen werden. Bei stets wiederkehrenden, gleichen Verhältnissen kann dann ein abgespeichertes Spektrum verwendet und gegebenenfalls auch kontinuierlich angepasst bzw. aktualisiert werden.

Die auf diese Weise abgeleitete Bildhelligkeit der als Störstrahlung wirkenden Hintergrundstrahlung dient als Grundlage für eine Subtraktion des Hintergrundes vom P-Bild und damit der Trennung des Zielsignals vom störenden Strahlungshintergrund.

Im Gegensatz zum Stand der Technik ergeben sich für das erfindungsgemässe Verfahren und die erfindungsgemässe Vorrichtung keine Probleme bei schnell veränderlichen Gesichtsfeldinhalten, wie z.B. schnell bewegte Störobjekte oder Bewegung der Sensorik.

Die Störungsunterdrückung ist dabei auch mit Sensorarrays im unteren Preissegment möglich. Bei diesen Sensoren gegebene, vergleichsweise geringe Messfrequenzen sind bei Auswertung mit diesem Verfahren kein Problem. Somit wird eine zuverlässige, preisgünstige Positionsbestimmung für Laserspots mit hoher Ortsauflösung ermöglicht.

Das Verfahren besitzt insbesondere dann Vorteile, wenn Sensorarrays zur Erhöhung der Ortsauflösung einer Laserspotsuche verwendet werden.

Das erfindungsgemässe Verfahren und eine dafür verwendbare Vorrichtung werden nachfolgend anhand von in der Zeichnung schematisch dargestellten Ausführungsbeispielen rein beispielhaft näher beschrieben. Die dargestellten Varianten unterscheiden sich in der Wahl des zugrundeliegenden Modells für das Spektrum der zu unterdrückenden Hintergrundstrahlung und damit sowohl im verwendeten Negativfilter als auch in der Methode, die N-Bildintensität auf die Wellenlänge des P-Bildes zu extrapolieren. Im einzelnen zeigen

Fig. 1 die schematische Darstellung der Schritte zur Ab- leitung eines Hintergrundes aus P- und N-bildern für ein erfindungsgemässes Verfahren;

Fig. 2 die schematische Darstellung der darauffolgenden Schritte zur Unterdrückung eines Hintergrundes im P-Bild für ein erfindungsgemässes Verfahren;

Fig.3a-b die schematische Darstellung der physikalischen Verhältnisse eines erfindungsgemässen Verfahrens zur Unterdrückung spektral breiter Störstrahlung als Zweiband-Nachbarschaftsmethode;

Fig.4a-d die schematische Darstellung der physikalischen Verhältnisse eines erfindungsgemässen Verfahrens zur Unterdrückung eines Stör- strahlungshintergrundes mit variierendem Spektrum oder mit Objekten zeitlich oder örtlich spektral selektiver Reflexion als Dreiband- Nachbarschaftsverfahren;

Fig.5a-b die schematische Darstellung der physikalischen Verhältnisse eines erfindungsgemässeh Verfahrens zur Unterdrückung des Einflusses von Störstrahlung mit spektraler Liniencharakteristik und

Fig.6 den schematischen Aufbau einer Vorrichtung zur Durchführung des erfindungsgemässen Verfahrens.

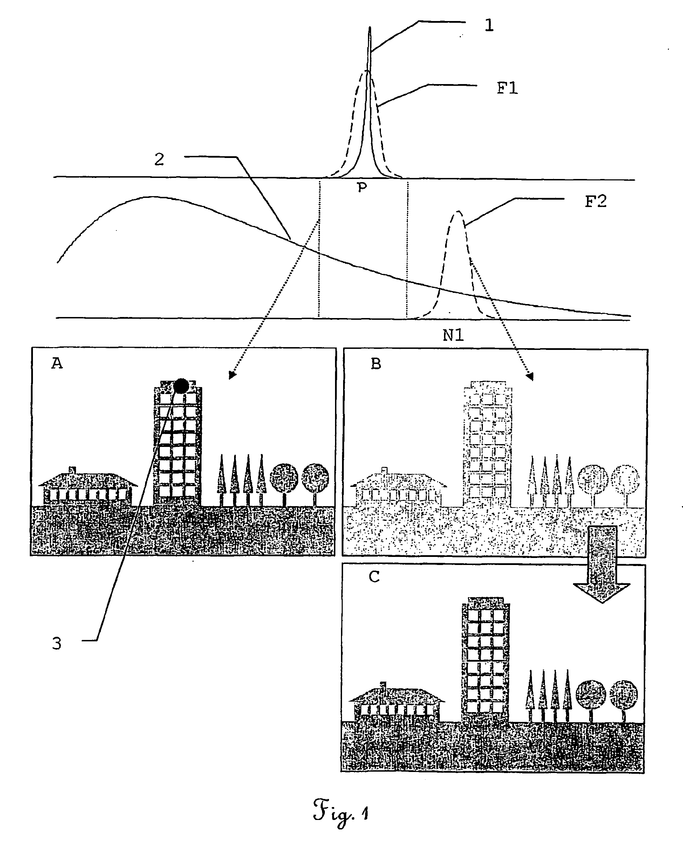

Fig.1 zeigt schematisch die Ableitung eines Hintergrundes C für ein P-Bild A, das einen Laserspot 3 enthält, der beispielsweise zur Markierung eines zu vermessenden Punktes an einem Gebäude verwendet wird. Diese Darstellung beschreibt rein schematisch und allgemein formuliert den prinzipiellen Gedanken des erfindungsgemässen Verfahrens, ohne auf spezielle anwendungsbezogene Spezifika, insbesondere hinsichtlich der Zahl und Gestaltung von Filtern, einzugehen. Diese werden für einige Beispiele in den anderen Figuren exemplarisch dargestellt.

Im oberen Teil der Figur sind die getrennten, spektralen Verläufe der Laserstrahlung 1 als zu extrahierendem Signal und einer Hintergrundstrahlung 2 dargestellt. Dabei besitzt die Laserstrahlung 1 Liniencharakter, während die Hintergrundstrahlung bzw. Störstrahlung beispielhaft den kontinuierlichen spektralen Verlauf eines thermischen Strahlers oder eines angenähert thermischen Strahlers, wie z.B. der Sonnenstrahlung, besitzt. Die Hintergrundstrahlung kann jedoch auch beispielsweise von einem weiteren Laser stammen, der z.B. zur parallelen Distanzmessung verwendet wird, und somit ebenfalls Liniencharakter besitzen. Die Bilder A, B und C zeigen jeweils den gleichen Bildausschnitt, jedoch mit Unterschieden hinsichtlich der Spektralbereiche und Bildhelligkeiten bzw. Intensitäten.

Ein P-Bild A und ein N-Bild B werden zeitgleich oder zumindest zeitnah für zwei durch spektrale Filter mit den Filtercharakteristiken F1 und F2 eingeschränkte Wellenlängenbereiche P für das P-Bild A und N1 für das N-Bild B aufgenommen. Dabei wird der Wellenlängenbereich P so gewählt, dass die Laserstrahlung 1 erfasst wird. Zusätzlich zur Laserstrahlung 1 enthält das P-Bild A jedoch noch den Anteil der Hintergrundstrahlung 2, der im Wellenlängenbereich P vorhanden ist. Der Wellenlängenbereich N1 kann auf der kurz- oder langwelligen Seite des Wellenlängenbereichs P liegen. Das N-Bild B enthält nun praktisch nur Hintergrund-strahlung, aber gegebenenfalls auch Anteile der Laserstrahlung 1, beispielsweise bei einer breiten Filtercharakteristik F2 oder einem geringen Abstand des Filters zur Wellenlänge der Laserstrahlung 1.

Aus dem im N-Bild B erfassten Ausschnitt der Hintergrundstrahlung 2 wird auf der Basis eines Modells für deren spektralen Verlauf der Anteil an Hintergrundstrahlung 2 in dem durch die Filtercharakteristik F1 erfassten Ausschnitt abgeleitet oder abgeschätzt. Dieser Anteil entspricht dem Bild C, das nun idealerweise bis auf den Laserspot 3 den gleichen Bildinhalt wie das P-Bild A besitzen sollte.

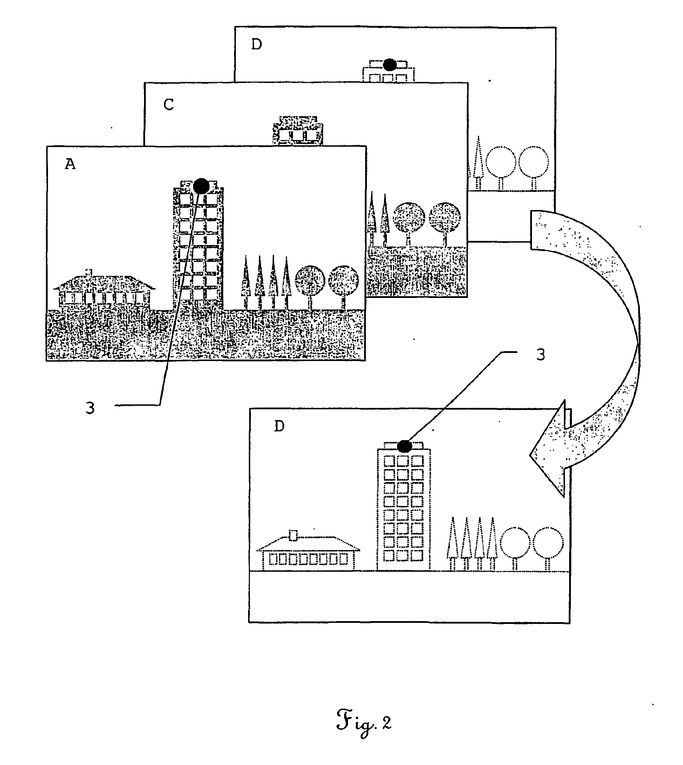

In Fig.2 ist die Verwendung der erhaltenen Bilder A und C zur Ableitung der Position des Laserspots 3 schematisch aufgeführt. Vom P-Bild A, das neben einem Anteil an Hintergrundstrahlung 2 den Laserspot 3 beinhaltet, wird das aus dem N-Bild abgeleitate Bild C, das nur Hintergrundstrahlung 2 enthält, abgezogen. Als Differenz folgt das Bild D, das nun nur noch den Laserspot 3 enthält. Der Umriss des für beide Bilder gleichen Bildinhalts wird gestrichelt dargestellt.

Die Verwendung einer reinen Subtraktion der Bildinhalte stellt jedoch nur eine Möglichkeit der Extraktion des Laserspots 3 dar. Beispielsweise kann der Unterschied in den Bildinhalten auch durch Quotientenbildung quantifiziert werden oder unter Verwendung weiterer Informationen z.B. für spezielle Bildbereiche sowie mit anderen Verfahren z.B. durch Neuronale Netze erfolgen.

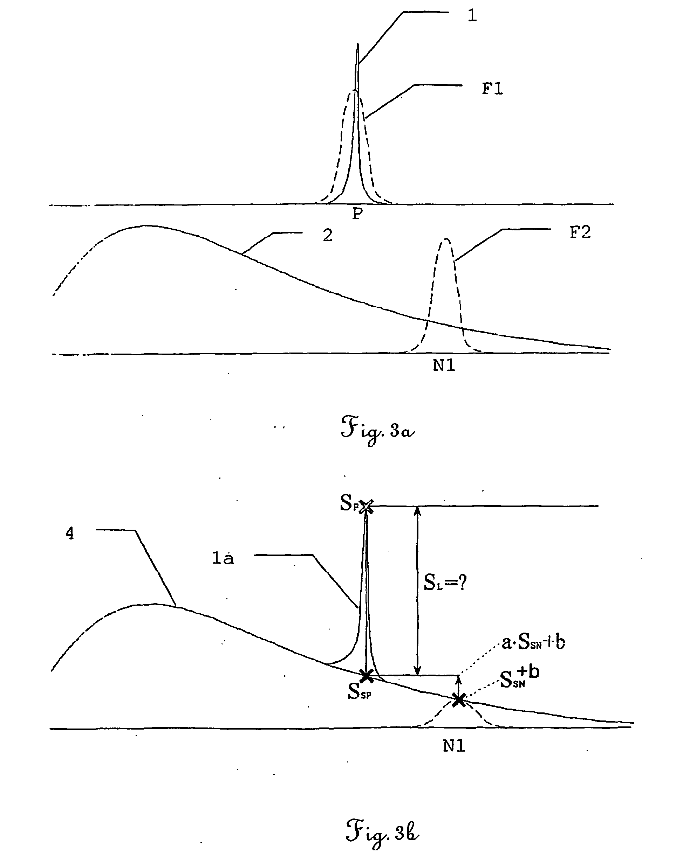

Fig.3 zeigt schematisch die Unterdrückung des Einflusses von spektral breiter Störstrahlung mittels einer Zweiband-Nachbarschaftsmethode mit exemplarischer Ableitung des Anteils an Hintergrundstrahlung im P-Bild. Die Methode entspricht dem in Fig.1 und Fig.2 prinzipiell und allgemein dargestellten Vorgehen, verwendet aber eine konkrete Methode zur Ableitung.

Für das N-Bild wird ein Bandpassfilter ähnlicher spektraler Breite wie für das P-Bild verwendet. Die zentrale Wellenlänge ist dabei in der Nähe der Laserstrahlung 1 zu wählen, wobei der Wellenlängenbereich N1 des N-Bildes allerdings soweit von dem Wellenlängenbereich P des P-Bildes entfernt sein muss, dass der Anteil des Lasersignals im N-Bild gering bleibt. Der Wellenlängenbereich N1 des N-Bildes kann dabei entweder kurzwelliger oder langwelliger als der Wellenlängenbereich des P-Bildes gewählt werden.

Als Beispiel wird die Unterdrückung einer Störung durch Sonnenlicht (Näherung als Planckscher Strahler mit einer Temperatur von 6000K) gewählt. Die Fig.3a zeigt die spektrale Transmissionscharakteristik der verwendeten Filter F1 und F2 zusammen mit den spektralen Intensitätsverteilungen der Laserstrahlung 1 (Ziellaser) und der Hintergrundstrahlung 2.

In Fig.3b ist für einen Ausschnitt des Gesichtsfeldes der Sensorik (z.B. ein Pixel) die spektrale Intensitätsverteilung der registrierten Strahlung 4 dargestellt, welche im Spektralbereich des P-Bildes sowohl den Anteil der Laserstrahlung 1 als Peak 1a als auch den der Hintergrundstrahlung 2 beinhaltet.

Im Wellenlängenbereich N1 des N-Bildes misst man einen Bildhelligkeitswert $S_{SN}$ welcher in (näherungsweise) linearem Zusammenhang zur Intensität der Störstrahlung $I_{SN}$ steht. Der Bildhelligkeitswert $S_{SN}$ wird durch eine lineare Helligkeitsanpassung (Parameter a, b) umgerechnet in eine Abschätzung der von der Störstrahlung generierten Bildhelligkeit im P-Bild $S_{SP}$ :

$$(1) \quad S_{SP} \approx a \cdot S_{SN} + b$$

Die Grössen $S_{SP}$ und $S_{SN}$ sind in Fig.3b dargestellt, die Parameter (a,b) werden anhand einer unter dem Gesichtspunkt der hinreichenden Genauigkeit ausgewählten Näherung bestimmt, beispielsweise kann so eine stückweise lineare Approximation des Spektrums der Störstrahlung 2 erreicht werden. Zur Positionsbestimmung wird die vom Ziellasersignal generierte Bildhelligkeit $S_L$ extrahiert. Dazu erfolgt eine Berechnung der Differenz aus der im P-Bild gemessenen Bildhelligkeit $S_P$ und der Abschätzung für $S_{SP}$:

$$(2) \quad S_L \approx S_P - (a \cdot S_{SN} + b)$$

In diesem Beispiel wird die Umrechnung der Bildhelligkeit vom N-Bild auf die von der Hintergrundstrahlung generierte Bildhelligkeit im P-Bild (Helligkeitsanpassung im N-Bild) auf numerischem Weg durch Multiplikation mit dem konstanten Faktor a und Addition einer Konstanten b erreicht. Alternativ kann auch ein gleicher Effekt durch entsprechende Verstärkung oder Abschwächung eines analogen Bildsignals erreicht werden (Helligkeitsanpassung durch Analogelektronik).

In beiden Fällen kann die Anpassung auch nichtlinear erfolgen, wobei a und b dann Funktionen der Bildhelligkeit sind. Beispielsweise kann eine nichtlineare Helligkeitsanpassung insbesondere dann notwendig sein, wenn die Störstrahlung schmalbandig und von hoher Intensität ist (z.B. Laserquellen, welche zusätzlich zum Ziellaser vorhanden sind)oder wenn bei den Sensoren Sättigungseffekte auftreten.

Eine lineare Helligkeitsanpassung des N-Bildes kann auch durch eine geeignete Wahl der Transmittivitäten von Positivfilter und Negativfilter erreicht werden. Dies entspricht einer Helligkeitsanpassung auf physikalischem Wege.

Bei der Helligkeitsanpassung des N-Bildes erfolgt zum einen die Berücksichtigung der Veränderung der spektralen Energieverteilung zwischen P-Bildwellenlänge und N-Bildwellenlänge. Zum anderen ist einer eventuell bei beiden Wellenlängen verschiedenen Sensorempfindlichkeit Rechnung zu tragen. Ist die Auswirkung beider Effekte zusammen vernachlässigbar, kann auf eine Helligkeitsanpassung ganz verzichtet werden.

Eine Voraussetzung für die Verwendung dieser Methode ist, dass sich die spektrale Charakteristik der Störstrahlung im betrachteten Gesichtsfeld nicht stark ändert, da ansonsten der genaue Verlauf nur schwer durch eine Messung mit einem Filter abzuschätzen ist. Ein Beispiel für Störstrahlung mit geringer Veränderung stellt beispielsweise eine rein thermische Emission wie z.B. das Licht einer Glühbirne dar. Weiterhin können Probleme mit spektral selektiven Reflektoren (bei einer Messung im sichtbaren Bereich des elektromagnetischen Spektrums: farbige Objekte) auftreten. Solchen Problemen kann durch eine geeignete Wahl der Filtercharakteristiken für P-Bild und N-Bild (vorzugsweise für beide mit Wellenlängenfenstern im Infrarot) entgegengewirkt werden.

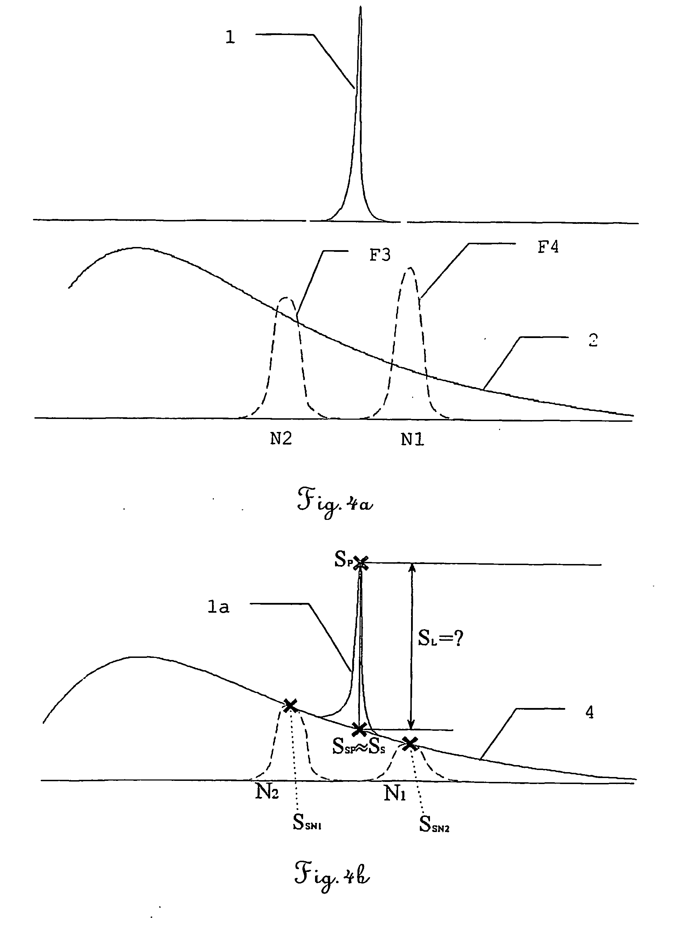

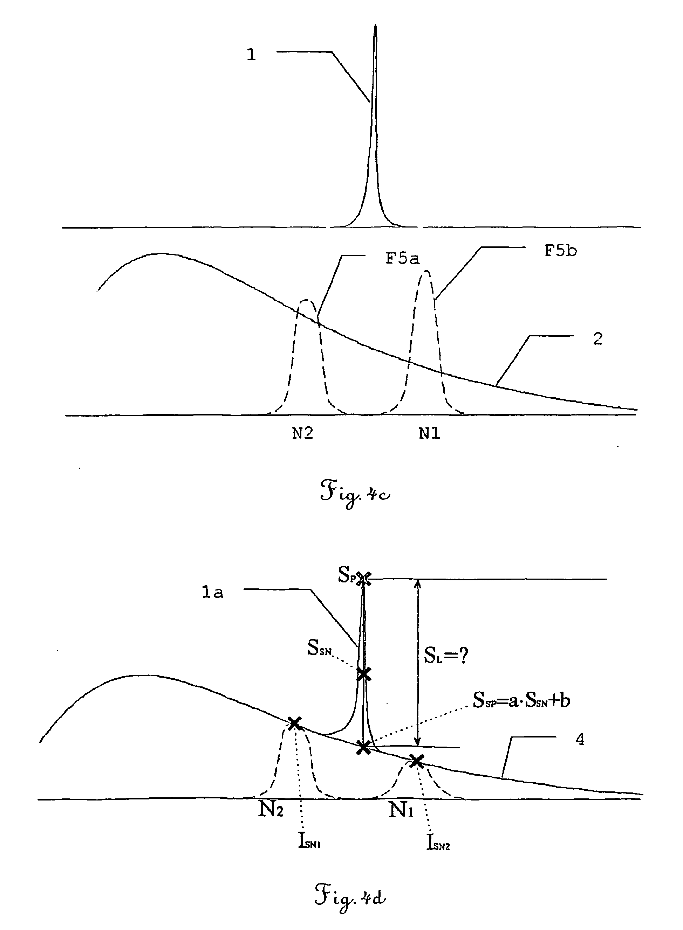

Fig.4 beschreibt die physikalischen Verhältnisse bei der Unterdrückung des Einflusses von Störstrahlung mit variierendem Spektrum oder mit Objekten spektral selektiver Reflexion durch eine Dreiband-Nachbarschaftsmethode.

Diese kann insbesondere verwendet werden, wenn die Ziellaserwellenlänge nicht frei gewählt werden kann oder eine ortsabhängig und/oder zeitabhängig stark unterschiedliche spektrale Verteilung der Beleuchtung vorherrscht.

Verwendet werden bei einer ersten Ausführung zwei N-Bilder. Für beide N-Bilder werden spektrale Bandpassfilter verwendet. Die Filtercharakteristiken F3 und F4 für die beiden N-Bilder, bei unverändertem P-Bild, d.h. einer Bildaufnahme mit einem Filter mit der gleichen Filtercharakteristik wie in den vorhergehenden Figuren, sind in Fig.4a skizziert.

Die zentralen Wellenlängen beider Bandpassfilter sind dabei in der Nähe der Wellenlänge der Laserstrahlung 1 des Ziellasers zu wählen. Dabei wird ein N-Bild (N1-Bild) langwelliger und das zweite N-Bild (N2-Bild) kurzwelliger aufgenommen als das P-Bild.

Die zentralen Wellenlängen beider Bandpassfilter sollten soweit von dem Wellenlängenbereich des P-Bildes entfernt sein, dass der Anteil der Laserstrahlung 1 des Ziellasers sowohl im N1-Bild als auch im N2-Bild gering bleibt.

In Fig.4b ist die spektrale Intensität der registrierten Strahlung 4 schematisch dargestellt, die von einem Ausschnitt des Gesichtsfeldes der Sensorik (z.B. Pixel) aufgenommen wird, welche im Spektralbereich des P-Bildes sowohl Strahlungsintensität von der Laserstrahlung 1 als Peak 1a als auch von der Hintergrundstrahlung 2 enthält.

Gemessen werden die Bildhelligkeitswerte in beiden N-Bildern: $S_{SN1}$, $S_{SN2}$.

Daraus berechnet man durch lineare Überlagerung $S_s$

$$(3) \quad S_S = a_1 \cdot S_{SN1} + a_2 \cdot S_{SN2} + b$$

welches eine Abschätzung der durch die Störstrahlung im P-Bild generierten Bildhelligkeit $S_{SP}$ ermöglicht:

$$S_{SP} \approx S_S$$

Als Grundlage für die Positionsbestimmung wird wiederum die vom Ziellasersignal im P-Bild generierte Bildhelligkeit $S_L$ extrahiert. Dazu berechnet man die Differenz aus der im P-Bild gemessenen Bildhelligkeit $S_P$ und der Abschätzung für $S_{SP}$ :

$$(4) \quad S_L \approx S_P - S_S$$

Die hier dargestellte lineare Abschätzung von $S_{SP}$ kann auch nichtlinear durchgeführt werden. Dazu verwendet man statt der konstanten Parameter $a_1, a_2, b$ Funktionen der lokalen Bildhelligkeit $a_1(S), a_2(S), b(S)$.

In jedem Fall kann die Berechnung der Abschätzung $S_S$ an die Empfindlichkeitscharakteristik des Sensors und an das Transmissionsverhalten der Filter N1 und N2 angepasst werden. Auch Zusatzwissen über die spektrale Verteilung der Hintergrundstrahlung kann in der Berechnung der Abschätzung $S_S$ berücksichtigt werden. In dem hier aufgeführten Beispiel wird die Berechnung der *Abschätzung* $S_S$ auf numerischem Weg durchgeführt. Alternativ kann $S_S$ auch durch entsprechende Verstärkung oder Abschwächung durch Analogelektronik bestimmt werden. Schliesslich kann durch geeignete Wahl der Filtercharakteristiken N1 und N2 die Abschätzung $S_s$ auch auf physikalischem Weg erreicht werden.

Eventuelle Änderungen der spektralen Intensität werden auf diese Weise durch die beiden gemittelten Wellenlängenbereiche eliminiert und es ist auch eine Auswertung mit verschiedenen Hintergrundspektren oder mit spektral stark unterschiedlich reflektierenden Störobjekten möglich.

Die Dreiband Nachbarschaftsmethode kann für spektral breitbandige Störstrahlung auch durch Aufnahme nur eines N-Bildes durchgeführt werden. Anstelle eines Bandpassfilters verwendet man einen Filter mit zwei Passbändern. Die Gesamt-Filtercharakteristik mit den beiden Teil-Filtercharakteristiken F5a und F5b für das N-Bild, bei unverändertem P-Bild, ist in Fig.4c skizziert. Es wird ein Filter mit zwei Wellenlängenbereichen N1 und N2 als Passbänder verwendet. Diese beiden Wellenlängenbereiche N1, N2 sind auf der kurz- und langwelligen Seite des Wellenlängenbereichs P des P-Bildes zu wählen, wobei ein Eintrag durch die Laserstrahlung 1 in das N-Bild bzw. dessen Wellenlängenbereiche N1, N2 nicht zu groß werden darf.

In Fig.4d ist die spektrale Intensitätsverteilung der registrierten Strahlung 4 schematisch dargestellt, die von einem Ausschnitt des Gesichtsfeldes der Sensorik (z.B. Pixel) aufgenommen wird, welche im Spektralbereich des P-Bildes sowohl Strahlungsintensität von der Laserstrahlung 1 als Peak 1a als auch von der Hintergrundstrahlung 2 enthält.

Der spektrale Filter des N-Bildes besitzt zwei Passbänder in den Wellenlängenbereichen N1 und N2. Diesen beiden Passbändern entsprechen zwei Intensitäten ($I_{SN1}$ und $I_{SN2}$) welche zur Abbildung im N-Bild beitragen. Die gemessenen Bildhelligkeitswerte im N-Bild $S_{SN}$ ergeben sich aus der linearen Überlagerung dieser beiden Intensitäten.

Ist das Spektrum der Störstrahlung 4 im Bereich der Passbänder von Positivfilter und Negativfilter breitbandig, so lässt sich die spektrale Intensitätsverteilung der Störstrahlung $\rho(\lambda)$ in diesem Bereich linear approximieren:

$$(5) \quad \rho(\lambda) \approx k_1 \lambda + k_2$$

Durch geeignete Wahl der beiden Filtercharakteristiken F5a F5b lässt sich erreichen, dass zwischen den Bildhelligkeitswerten im N-Bild $S_{SN}$ und den von der Störstrahlung generierten Bildhelligkeitswerten im P-Bild $S_{SP}$ ein von $k_1$ und $k_2$ unabhängiger linearer Zusammenhang besteht:

$$(6) \quad S_{SP} = a \cdot S_{SN} + b$$

Zur Positionsbestimmung wird die im P-Bild generierte Bildhelligkeit $S_L$ extrahiert. Dazu erfolgt eine Berechnung der Differenz aus den im P-Bild gemessenen Bildhelligkeitswerten $S_P$ und der Abschätzung für $S_{SP}$:

$$(7) \quad S_L = S_P - (a \cdot S_{SN} + b)$$

Diese Abschätzung bleibt unabhängig von den Parametern $k_1$ und $k_2$ der linearen Approximation des Störstrahlungsspektrums gültig. Daher ist es mit dieser Methode möglich das Zielsignal auch von Störstrahlung mit räumlich oder zeitlich variablem Spektrum zu trennen. Voraussetzung ist nur, dass das Spektrum im Auswertebereich (Transmissionsbereich Negativfilter) in guter Näherung linear approximiert werden kann.

In diesem Beispiel wird die Umrechnung der Bildhelligkeitswerte vom N-Bild auf die von der Störstrahlung generierte Bildhelligkeit im P-Bild (Helligkeitsanpassung im N-Bild) auf numerischem Weg durch Multiplikation mit dem konstanten Faktor a und Addition einer Konstanten b erreicht. Alternativ kann auch ein gleicher Effekt durch entsprechende Verstärkung oder Abschwächung eines analogen Bildsignals erreicht werden (Helligkeitsanpassung durch Analogelektronik).

In beiden Fällen kann die Anpassung wiederum auch nichtlinear erfolgen wobei a und b dann Funktionen der Helligkeitswerte sind. Durch eine nichtlineare Helligkeitsanpassung kann die von Störstrahlung verursachte Bildhelligkeit im Positivbild genauer abgeschätzt werden. Dies erfolgt insbesondere bei schmalbandiger Störstrahlung oder wenn bei den Sensoren Sättigungseffekte auftreten.

Die relative Höhe der beiden Transmissionsmaxima des Negativfilters wird an die Empfindlichkeitscharakteristik des Sensors angepasst. In Fig.4c sind die Höhen der beiden Maxima so gewählt, dass einer kleineren Sensitivität der Sensorik im langwelligen Bereich, die bei Messung im infraroten Bereich gegeben ist, entgegengewirkt wird. Auch Zusatzwissen über die spektrale Verteilung der Hintergrundstrahlung kann in den relativen Höhen der beiden Transmissionsmaxima des Negativfilters berücksichtigt werden.

Eventuelle Änderungen der spektralen Intensität werden auf diese Weise durch die beiden gemittelten Wellenlängenbereiche eliminiert und es ist auch eine Auswertung mit verschiedenen Hintergrundspektren oder mit spektral stark unterschiedlich reflektierenden Störobjekten möglich.

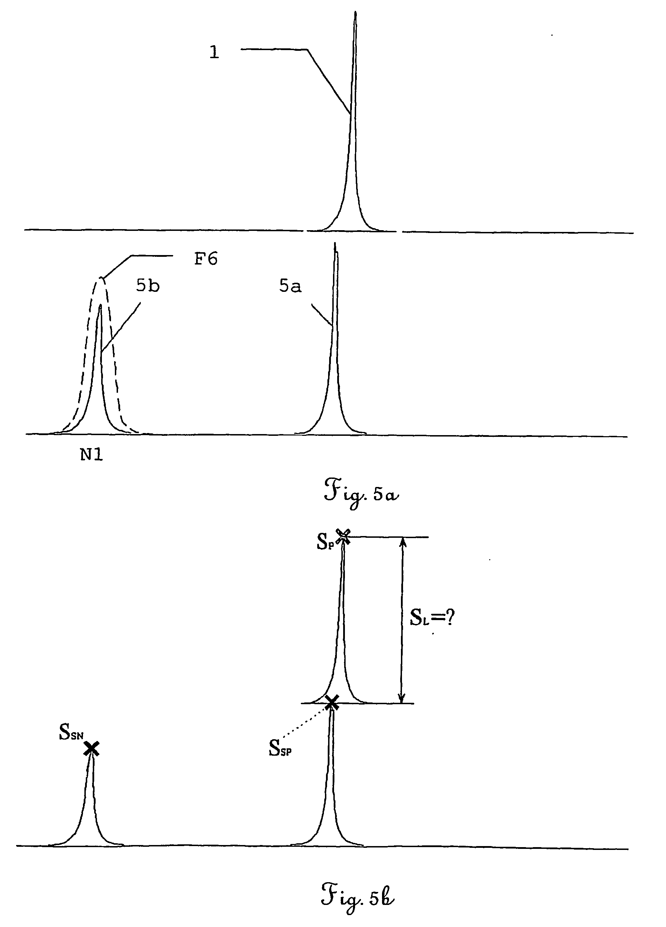

Die Fig.5 zeigt schematisch die physikalischen Verhältnisse bei der Unterdrückung des Einflusses von Störstrahlung mit spektraler Liniencharakteristik.

Besitzt das Störstrahlungs- bzw. Hintergrundspektrum eine Liniencharakteristik, so kann bei bekanntem Intensitätsverhältnis zwischen den Spektrallinien von der N-Bildhelligkeit auf die von der Hintergrundintensität hervorgerufene Bildhelligkeit im P-Bild zurückgerechnet werden. Ein Beispiel für Störstrahlung mit spektraler Liniencharakteristik ist die im industriellen Bereich verbreitete Ausleuchtung der Messumgebung mit Gasentladungslampen oder Leuchtstoffröhren.

Fig.5a stellt, bei unverändertem Positivfilter, d.h. einem Filter mit der gleichen Filtercharakteristik wie in den vorhergehenden Figuren, die spektrale Filtercharakteristik F6 für den Negativfilter dar.

Das Passband des Negativfilters F6 wird bei der Wellenlänge einer Spektrallinie der Hintergrundstrahlung, aber ausserhalb des Peaks der Laserstrahlung 1, gewählt. Betrachtet wird ein Bildausschnitt, der als erfasste Strahlung Intensitäten sowohl von der Hintergrundstrahlung (Linien 5a und 5b) als auch von der Laserstrahlung 1 empfängt.

Fig.5b stellt für diesen Bildausschnitt die spektrale Intensitätsverteilung der registrierten Strahlung dar.

Eine Abschätzung für die Bildhelligkeit durch Störstrahlung im P-Bild $S_{SP}$ kann wiederum berechnet werden, indem man die Bildhelligkeitswerte der Stör- bzw. Hintergrundstrahlung im N-Bild $S_{SN}$ linear umrechnet (lineare Helligkeitsanpassung mit Parameter a,b):

$$(8) \quad S_{SP} \approx a \cdot S_{SN} + b$$

Diese Abschätzung ist möglich, wenn beispielsweise die relativen Intensitäten von verschiedenen Linienemissionen bekannt sind. Als Grundlage für die Positionsbestimmung wird die vom Ziellasersignal verursachte Bildhelligkeit $S_L$ im P-Bild extrahiert. Dazu erfolgt wiederum eine Berechnung der Differenz aus den im P-Bild gemessenen Bildhelligkeitswerten $S_P$ und den Abschätzungen für $S_{SP}$:

$$(9) \quad S_L \approx S_P - a \cdot S_{SN} + b$$

Die Helligkeitsanpassung des N-Bildes kann, wie unter Fig.3 gezeigt, linear erfolgen aber auch nichtlinear durchgeführt werden, wobei die Helligkeitsanpassung numerisch, durch Analogelektronik oder auf physikalischem Wege durchgeführt werden kann.

Bei der Helligkeitsanpassung kann sowohl der unterschiedlichen Intensität in beiden Spektrallinien als auch der unterschiedlichen Sensitivität der Sensorik in beiden Wellenlängenbereichen Rechnung getragen werden.

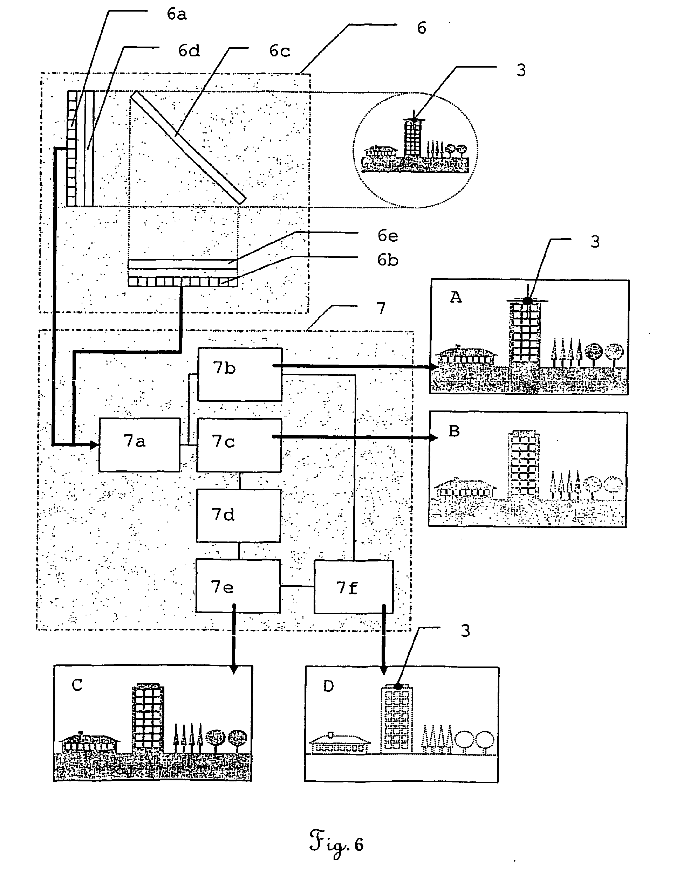

In Fig. 6 wird ein Beispiel für die Realisierung einer erfindungsgemässen Vorrichtung schematisch dargestellt. Der zu analysierende Bildausschnitt mit einem zu detektierendem Laserspot 3 wird von den Mitteln zur Aufnahme elektromagnetischer Strahlung 6 erfasst und über einen Strahlteiler 6c und auf zwei Detektoren 6a und 6b mit jeweils einem vorgeschalteten Filter 6d und 6e geführt. Die Detektoren 6a und 6b bestehen ihrerseits aus einer Vielzahl von Detektorkomponenton. Die beiden Filter 6d und 6e besitzen unterschiedliche spektrale Charakteristiken, so dass durch den Detektor 6a ein P-Bild-A mit Laserspot 3 und den Detektor 6b ein N-Bild B in einem Spektralbereich ohne Laserstrahlung aufgenommen werden.

Hier wird nun jeweils mindestens ein Bild durch zwei getrennte Detektoren mit differierenden spektralen Aufnahmevermögen aufgenommen. Gleichermassen kann auch kurz hintereinander mit dem gleichen Detektor aber verändertem Aufnahmevermögen gearbeitet werden. Die spektral selektive Einschränkung der Aufnahme kann hierbei durch Bandpassfilter erfolgen, die in den Strahlgang vor dem Detektor eingeschoben oder rotiert werden, z.B. mit einer Trommel oder einer Revolverhalterung.

Eine weitere Möglichkeit zur Aufnahme von mindestens zwei spektral selektiven Bildern ist die Unterteilung eines Sensorarrays in einzelne Sensoren unterschiedlicher spektraler Empfangscharakteristik, z.B. durch ein ortsabhängig variables Aufbringen von Filtern verschiedenen Typs.

In allen Fällen kann jedoch der Einsatz von spektral selektiven Filtern auch durch die Verwendung von spektral selektiven Detektoren ersetzt werden, z.B. indem das spektrale Ansprechverhalten des Detektors direkt durch die Wahl des Detektormaterials oder durch Steuerung des physikalischen Verhaltens des Detektors verändert wird. Ausserdem können die mindestens zwei spektral selektiven Bilder durch Verwendung eines Sensorarrays aufgenommen werden, wenn jeder Einzelsensor des Sensorarrays in der Lage ist, Messungen in mehreren spektralen Bereichen durchzuführen.

Beide Bilder A, B werden an die Mittel zur Signal- und Informationsverarbeitung übertragen und dort nach einer Ausrichtung durch rotatorische und translatorische Positionierung über eine Ausrichtungseinheit 7a in zwei Bildspeichern 7b und 7c abgespeichert. Die hochgenaue Ausrichtung der Bilder zueinander oder zu einer Referenzgrösse kann bereits bei der Aufnahme oder bei späteren Schritten der Bildverarbeitung erfolgen. Ein Beispiel für die aufnahmenahe Ausrichtung stellt die hochgenaue Justierung der Detektoren zueinander dar. Alternativ oder ergänzend kann während späterer Verarbeitungsschritte die Positionierung durch digitale Signalverarbeitung erfolgen.

Aus dem N-Bild B wird durch eine Recheneinheit 7d ein Bild C abgeleitet, das der Hintergrundstrahlung des P-Bildes A entspricht, und im Bildspeicher 7e abgespeichert. Die Ableitung der Intensität der Hintergrundstrahlung erfolgt beispielsweise durch digitale oder analoge Elektronik oder auch, wie weiter oben beschrieben, auf rein physikalischem Weg. Die Zahl der Bildspeicher kann je nach Auslegung der Vorrichtung variiert werden.

Je nach konkreter Ausgestaltung können auch mehrere P- und N-Bilder A,B aufgenommen werden und jeweils paarweise oder nach Aggregation, z.B. nach jeweiliger Überlagerung aller P- und N-Bilder zu einem Aggregat, verarbeitet werden.

Durch eine Auswerte- und Vergleichseinheit 7f werden die Bildinhalte der in den Bildspeichern 7b und 7e abgespeicherten Bilder A und C verglichen und das Bild D abgeleitet, aus dem die Position des Laserspots 3 folgt. Im einfachsten Fall erfolgt eine reine Differenzbildung der beiden Bildinhalte, bei der jeweils positionsgleiche Pixel mit gleichem Bildhelligkeitswert bzw. gleichem Inhalt vollständig aus dem Bild eliminiert werden. Differieren Pixel gleicher Position in ihrem Inhalt, verbleiben Netto-Helligkeitswerte, die ein weiteres Zwischenbild ergeben können und gegebenenfalls noch weiter analysiert werden können. So können ergänzend oder alternativ noch weitere Bildverarbeitungsschritte im Zusammenhang mit dem Vergleich der Bildinhalte zum Einsatz kommen, die beispielsweise weitere Informationen verarbeiten, z.B. zur Unterdrückung eines Detektorrauschens.

Auch können durch Messung mehrerer N-Bilder die einzelnen in Fig.3 bis Fig.5 beschriebenen Methoden verwendet werden, um jeweils Anteile der Störstrahlungsintensität im P-Bild abzuschätzen. Aus diesen Anteilen kann die Gesamtintensität der Stör- bzw. Hintergrundstrahlung im P-Bild genauer abgeschätzt werden, als dies mit den Einzelmethoden möglich ist.

Die in Fig.1 - Fig.5 dargestellten Bilder sowie Verläufe und Profile der Modelle einer spektralen Intensität und die verwendeten Filter sind rein qualitativ zu verstehen. Dargestellte Graustufen und abzuleitende Differenzen erläutern auftretende Effekte qualitativ und können nicht als Grundlage von quantitativ exakten Betrachtungen dienen.

Die Extraktion des Signals des Ziellasers durch Subtraktion ist in den Formeln 2, 4, 7, 9 und in der Beschreibung zu Fig.6 nur als ein Beispiel für die zahllosen Möglichkeiten der Kombination von Bildinformation des P-Bildes und der aus dem N-Bild generierten Abschätzung für die Störstrahlungsintensität zu verstehen.

Ein weiteres Beispiel für eine solche Kombination ist die gewichtete Mittelung von extrahierten Bildmerkmalen (Feature Extraction). Dabei werden Bildmerkmale aus mehreren Bildbereichen extrahiert und jeweils mit dem reziproken Wert der Abschätzung der Störstrahlungsintensität im ausgewerteten Bereich nach einer Gewichtung gemittelt.

Die in Fig.6 dargestellte erfindungsgemässe Vorrichtung stellt nur eine exemplarische Form der Realisierung dar, die somit nur eine konkrete Ausgestaltung unter vielen Alternativen darstellt. So können beispielsweise die Bildspeicher 7b-7c in ihrer Zahl verringert oder vermehrt oder auch den Mitteln zur Aufnahme elektromagnetischer Strahlung zugeordnet werden. Insbesondere ist auch die Verwendung eines einzelnen Detektors, z.B. mit einer sequentiellen Aufnahme von zwei oder mehreren Bildern oder mit einer gleichzeitigen Aufnahme von Bildern durch spektral unterschiedlich selektive Detektorkomponenten, möglich.

Das Verfahren und insbesondere die Ableitung der Bildhelligkeiten des Hintergrundes kann sowohl auf der Ebene des Gesamtbildes, d.h. für alle Bildpixel gemeinsam, als auch auf der Ebene von Bildausschnitten bzw. Bildteilen oder bis hinunter auf die Ebene einzelner Pixel jeweils separat durchgeführt werden. Dabei kann beispielsweise auch Zusatzwissen, z.B. zu einzelnen Teilbereichen des Bildes, verwertet werden.

Es versteht sich, dass die dargestellten Figuren eine von vielen Ausführungsformen darstellen und der Fachmann alternative Realisierungsformen, z.B. unter Verwendung anderer Mittel zur Einschränkung der Transmission elektromagnetischer Strahlung oder unter Verwendung von Filtern mit anderen Charakteristiken, ableiten kann. Auch ist die Zuordnung der verschiedenen Methoden zu Störstrahlungstypen oder - eigenschaften nicht ausschliessend zu verstehen. Die beschriebenen Methoden können grundsätzlich für die Unterdrückung beliebiger Formen von Hintergründen oder Störstrahlungsquellen verwendet werden.

**Patentansprüche**

1. Verfahren zur Unterdrückung elektromagnetischer Hintergrundstrahlung (2) in einem definierten Spektralbereich (P) gegenüber einem zu detektierenden Signal zur Positionsbestimmung eines Laserspots (3),

   • mit Mitteln zur Aufnahme elektromagnetischer Strahlung (6), vorzugsweise mit mindestens einem Detektor (6a, 6b) aus mehreren Komponenten, und
   • mit Mitteln zur Signal- und Informationsverarbeitung (7),
   wobei

      - mindestens ein, ein- oder mehrdimensionales Positiv-Bild (A) für den definierten Spektralbereich (P) und
      - mindestens ein, ein- oder mehrdimensionales Negativ-Bild (B) für mindestens einen weiteren definierten und von dem des Positiv-Bildes (A) verschiedenen Spektralbereich (N1, N2)
      durch die Mittel zur Aufnahme elektromagnetischer Strahlung (6), vorzugsweise zeitgleich, aufgenommen werden,

   **dadurch gekennzeichnet, dass**
   • durch die Mittel zur Signal- und Informationsverarbeitung (7) aus dem mindestens einen Negativ-Bild (B) auf der Basis des

      o zur Verwendung bei wiederkehrenden, gleichen Verhältnissen bei konstanten Verhältnissen direkt vemessenen und abgespeicherten oder
      o auf der Basis physikalischer Modelle berechneten Verlaufs der spektralen Verteilung der Hintergrundstrahlung (2) auf die Bildhelligkeit $S_{SP}$ der Hintergrundstrahlung (2) im mindestens einen Positiv-Bild (A) geschlossen und das zu detektierende Signal als Position des Laserspots (3) in Positiv-Bild (17) extrahiert wird,

   • wobei die Spektralbereiche (P, N1, N2) des mindestens einen Positiv-Bildes (A) und des mindestens einen Negativ-Bildes (B) durch Wahl eines Wellenlängenbandes jeweils für das mindestens eine Positiv-Bild (A) und das mindestens eine Negativ-Bild (B) festgelegt werden, und wobei
   • das Wellenlängenband des mindestens einen Negativ-Bildes (B) entweder auf der kurz- oder langwelligen Seite des Wellenlängenbandes des mindestens einen Positiv-Bildes (A) liegt und vorzugsweise eine Überschneidung beider Wellenlängenbänder minimiert wird.

2. Verfahren nach Anspruch 1,
   **dadurch gekennzeichnet, dass**

   • zur Unterdrückung von Hintergrundstrahlung mit Liniencharakteristik die Spektralbereiche (P, N1, N2) des mindestens einen Positiv-Bildes (A) und des mindestens einen Negativ-Bildes (B) durch Wahl mindestens eines Wellenlängenbandes jeweils für das mindestens eine Positiv-Bild (A) und das mindestens eine Negativ-Bild (B) festgelegt werden, wobei
   • die Wellenlängenbänder jeweils verschiedene Linien (1, 5a, 5b) erfassen.

3. Verfahren nach Anspruch 1,
   **dadurch gekennzeichnet, dass**
   der Spektralbereich (P, N1, N2) des mindestens einen Negativ-Bildes (B) durch Wahl zweier Wellenlängenbänder festgelegt wird, wobei die Wellenlängenbänder des mindestens einen Negativ-Bildes (B) jeweils auf der kurz-und/oder langwelligen Seite des Wellenlängenbandes (P) des mindestens einen Positiv-Bildes (A) liegen.

4. Verfahren nach einem der vorangehenden Ansprüche,
   **dadurch gekennzeichnet, dass**
   die Bildhelligkeit $S_{SP}$ der Hintergrundstrahlung (2) zur Abschätzung und Eliminierung von Anteilen unterschiedlicher Störstrahlungsquellen für verschiedene spektrale Bereiche abgeleitet wird.

5. Verfahren nach einem der vorangehenden Ansprüche,
   **dadurch gekennzeichnet, dass**
   das Ableiten der Bildhelligkeit $S_{SP}$ der Hintergrundstrahlung (2), im mindestens einen Positiv-Bild (A) unter Verwendung wenigstens einer der folgenden Methoden erfolgt

- Extrapolation wenigstens einer im mindestens einen Negativ-Bild (B) aufgenommenen Bildhelligkeit $S_{SN}$,
- Gewichtete Mittelwertbildung von mindestens zwei im mindestens einen Negativ-Bild (B) aufgenommenen Bildhelligkeiten $S_{SN1}$.

**6.** Vorrichtung zur Unterdrückung elektromagnetischer Hintergrundstrahlung (2) in einem definierten Spektralbereich (P) gegenüber einem zu detektierenden Signal - zur Positionsbestimmung eines zu detektierenden Laserspots (3),

    • mit Mitteln zur Aufnahme elektromagnetischer Strahlung (6), und
    • mit Mitteln zur Signal- und Informationsverarbeitung (7),

wobei die Mittel zur Aufnahme elektromagnetischer Strahlung (6) zur, vorzugsweise zeitgleichen, Aufnahme mindestens eines Positiv-Bildes (A) und mindestens eines Negativ-Bildes (B) ausgelegt sind und die Mittel zur Signal- und Informationsverarbeitung (7) so ausgelegt sind, dass aus dem unterschiedlichen Inhalt von mindestens einem Positiv-Bild (A) und durch die Mittel zur Signal- und Informationsverarbeitung (7) angepasstem mindestens einem Negativ-Bild (B) elektromagnetische Hintergrundstrahlung (2) unterdrückt werden, **dadurch gekennzeichnet, dass**

    • die Mittel zur Aufnahme elektromagnetischer Strahlung (6) wenigstens zwei Detektoren zur Aufnahme von Bildern (A, B) in mindestens zwei unterschiedlichen, definierten Spektralbereichen (P, N1, N2) aufweisen und
    • die Mittel zur Signal- und Informationsverarbeitung (7) so ausgelegt sind, dass die elektromagnetische Hintergrundstrahlung (2) auf der Basis des
    o zur Verwendung bei wiederkehrenden, gleichen Verhältnissen bei konstanten Verhältnissen direkt vormessenen und abgespeicherten oder
    o auf der Basis physikalischer Modelle berechneten Verlaufs der spektralen Verteilung der Hintergrundstrahlung (2) unterdrückt und als in detehherandes Signal die Position des Laserspots (3) im Positiv-Bild (A) extrahiert werden.

**7.** Vorrichtung nach Anspruch 6,
**dadurch gekennzeichnet, dass**

    o der Spektralbereich der Mittel zur Aufnahme elektromagnetischer Strahlung (6) durch mindestens einen spek- : tralen Filter (6d, 6e) eingeschränkt ist und/oder
    o die Mittel zur Aufnahme elektromagnetischer Strahlung (6) mindestens einen Detektor (6a, 6b) aufweisen, der aus zwei oder mehreren Halbleitermaterialien besteht, die ein spektral selektives Ansprechverhalten des Detektors (6a, 6b) bewirken.

**8.** Vorrichtung nach Anspruch 6 oder 7,
**dadurch gekennzeichnet, dass**
die Mittel zur Signal- und Informationsverarbeitung (7) so ausgelegt sind, dass das mindestens eine Positiv-Bild (A) und das mindestens eine Negativ-Bild (B), vorzugsweise durch digitale Signalverarbeitung, gegeneinander translatierbar und/oder rotierbar und/oder im relativen Abbildungsmassstab veränderbar sind.

**9.** Messgerät, insbesondere zur geodätischen Vermessung,
**dadurch gekennzeichnet, dass**
dieses eine Vorrichtung zur spektral selektiven Unterdrückung einer elektromagnetischen Hintergrundstrahlung (2), insbesondere zur Positionsbestimmung eines zu detektierenden Laserignals (3) nach einem der Ansprüche 6 bis 8 aufweist.

**10.** Verwendung einer Vorrichtung nach einem der Ansprüche 6 bis 8 zur Identifikation eines Laserspots (3) als Markierung für nachfolgende Messprozesse, insbesondere für Distanzmessungen zu dem markierten Punkt.

**11.** Verwendung einer Vorrichtung nach einem der Ansprüche 6 bis 8 zur Identifikation einer Quelle eines Laserspots, insbesondere zur Identifikation eines zielbeleuchtenden Lasers (Target Designation).

**Claims**

**1.** Method for suppressing electromagnetic background radiation (2) in a defined spectral region (P) with respect to a signal to be detected for determining the position of a laser spot (3),

    • with means for recording electromagnetic radiation (6), preferably with at least one detector (6a, 6b) made of a plurality of components, and
    • with means for signal and information processing (7),
    with

    - at least one one-dimensional or multidimensional positive image (A) for the defined spectral region (P) and
    - at least one one-dimensional or multidimensional negative image (B) for at least one further defined spectral region (N1, N2), which differs from the spectral region of the positive image (A),
being recorded, preferably simultaneously, by the means for recording electromagnetic radiation (6),

**characterized in that**
• the means for signal and information processing (7) deduce, from the at least one negative image (B), the image brightness $S_{SP}$ of the background radiation (2) in the at least one positive image (A) on the basis of the profile,

 o directly measured and stored for use in recurring, unchanging conditions in the case of constant conditions or
 o calculated on the basis of physical models,

of the spectral distribution of the background radiation (2) and the signal to be detected is extracted as a position of the laser spot (3) in the positive image (A),

 • the spectral regions (P, N1, N2) of the at least one positive image (A) and the at least one negative image (B) being set by respectively selecting a wavelength band for the at least one positive image (A) and the at least one negative image (B), and
 • the wavelength band of the at least one negative image (B) lying on either the short-wavelength side or the long-wavelength side of the wavelength band of the at least one positive image (A) and an overlap of the two wavelength bands preferably being minimized.

2. Method according to Claim 1,
 **characterized in that**

 • the spectral regions (P, N1, N2) of the at least one positive image (A) and the at least one negative image (B) are set for suppressing background radiation with a line characteristic by respectively selecting at least one wavelength band for the at least one positive image (A) and the at least one negative image (B),
 • the wavelength bands each registering different lines (1, 5a, 5b).

3. Method according to Claim 1,
 **characterized in that**
 the spectral region (P, N1, N2) of the at least one negative image (B) is set by selecting two wavelength bands, the wavelength bands of the at least one negative image (B) each lying on the short-wavelength side and/or long-wavelength side of the wavelength band (P) of the at least one positive image (A).

4. Method according to any one of the preceding claims,
 **characterized in that**
 the image brightness $S_{SP}$ of the background radiation (2) is derived for estimating and eliminating components of different stray radiation sources for various spectral regions.

5. Method according to any one of the preceding claims,
 **characterized in that**
 the image brightness $S_{SP}$ of the background radiation (2) in the at least one positive image (A) is derived using at least one of the following methods:

  - extrapolating at least one image brightness $S_{SN}$ recorded in the at least one negative image (B),
  - forming a weighted average of at least two image brightnesses $S_{SNi}$ recorded in the at least one negative image (B).

6. Device for suppressing electromagnetic background radiation (2) in a defined spectral region (P) with respect to a signal to be detected for determining the position of a laser spot (3) to be detected,

 • with means for recording electromagnetic radiation (6), and
 • with means for signal and information processing (7),

 the means for recording electromagnetic radiation (6) being designed for, preferably simultaneous, recording of at least one positive image (A) and at least one negative image (B),
 and the means for signal and information processing (7) being designed such that electromagnetic background radiation (2) can be suppressed from the differing content of at least one positive image (A) and at least one negative image (B), the latter being adjusted by the means for signal and information processing (7),
 **characterized in that**

  • the means for recording electromagnetic radiation (6) have at least two detectors for recording images (A, B) in at least two different, defined spectral regions (P, N1, N2) and
  • the means for signal and information processing (7) are designed such that the electromagnetic background radiation (2) is suppressed on the basis of the profile,

   o directly measured and stored for use in recurring, unchanging conditions in the case of constant conditions or
o calculated on the basis of physical models,

of the spectral distribution of the background radiation (2) and the position of the laser spot (3) in the positive image (A) is extracted as the signal to be detected.

7. Device according to Claim 6, **characterized in that**

• the spectral region of the means for recording electromagnetic radiation (6) is restricted by at least one spectral filter (6d, 6e) and/or
• the means for recording electromagnetic radiation (6) have at least one detector (6a, 6b), which consists of two or more semiconductor materials that bring about a spectrally selective response characteristic of the detector (6a, 6b).

8. Device according to Claim 6 or 7, **characterized in that**
the means for signal and information processing (7) are designed such that the at least one positive image (A) and the at least one negative image (B) can be translated and/or rotated with respect to one another and/or can be changed with respect to their relative magnification, preferably as a result of digital signal processing.

9. Measurement instrument, more particularly for geodetic surveying, **characterized in that**
it has a device for spectrally selective suppression of electromagnetic background radiation (2), in particular for determining the position of a laser signal (3) to be detected according to any one of Claims 6 to 8.

10. Use of a device according to any one of Claims 6 to 8 for identifying a laser spot (3) as a marking for subsequent measurement processes, more particularly for distance measurements to the marked point.

11. Use of a device according to any one of Claims 6 to 8 for identifying a source of a laser spot, more particularly for identifying a target-illuminated laser (target designation).

**Revendications**

1. Procédé pour supprimer le rayonnement électromagnétique de fond (2) dans une plage spectrale (P) définie par rapport à un signal à détecter, pour la détermination de position d'un point laser (3),

• avec des moyens, pour enregistrer un rayonnement électromagnétique (6), de préférence avec au moins un détecteur (6a, 6b) composé de plusieurs composants,
• avec des moyens pour le traitement de signal et d'information (7),
où

- au moins une image en positif (A) monodimensionnelle ou pluridimensionnelle, pour la plage spectrale (P) définie, et
- au moins une image en négatif (B) monodimensionnelle ou pluridimensionnelle, pour au moins une autre plage spectrale (N1, N2), définie et différente de celle de l'image en positif (A),
sont enregistrées à l'aide des moyens pour enregistrer un rayonnement électromagnétique (6),

**caractérisé en ce que**
• à l'aide des moyens pour le traitement de signal et d'information (7), à partir de la au moins une image en négatif (B), sur la base de l'allure,

o directement mesurée et mémorisée pour utilisation dans des conditions répétitives identiques, dans des conditions constantes, ou
o calculée sur la base de modèles physiques,

de la distribution spectrale du rayonnement de fond (2), on tire des conclusions sur la luminosité d'image $S_{SP}$ du rayonnement de fond (2) dans au moins une image en positif (A), et l'on extrait le signal à détecter, en tant que position du point laser (3) dans l'image en positif (A),
• les plages spectrales (P, N1, N2) de la au moins une image en positif (A) et de la au moins une image en négatif (B) sont fixées par sélection d'une bande de longueurs d'ondes chaque fois pour la au moins une image en positif (A) et la au moins une image en négatif (B), et où
• la bande de longueurs d'ondes de la au moins une image en négatif (B) est située, soit sur le côté ondes courtes, soit sur le côté ondes longues, de la bande de longueurs d'ondes de la au moins une image en positif (A) et, de préférence, un recouvrement des deux bandes de longueurs d'ondes est minimisé.

2. Procédé selon la revendication 1, **caractérisé en ce que**

• pour supprimer le rayonnement de fond à caractéristique linéaire, plages spectrales (P, N1, N2) de la au moins une image en positif (A) et de la au moins une image en négatif (B) sont fixées par sélection d'au moins une bande de longueurs d'ondes chaque fois pour la au moins une image en positif (A) et la au moins une image en négatif (B), où

• les bandes de longueurs d'ondes appréhendent chaque fois des lignes (1, 5a, 5b) différentes.

**3.** Procédé selon la revendication 1,
**caractérisé en ce que**
la plage spectrale (P, N1, N2) de la au moins une image en négatif (B) est fixée par sélection de deux bandes de longueurs d'ondes, les bandes de longueurs d'ondes de la au moins une image en négatif (B) étant chaque fois situées sur le côté ondes courtes et/ou sur le côté ondes longues de la bande de longueurs d'ondes (P) de la au moins une image en positif (A).

**4.** Procédé selon l'une des revendications précédentes,
**caractérisé en ce que**
la luminosité d'image $S_{SP}$ du rayonnement de fond (2) est dérivée, aux fins d'estimation et d'élimination de parties de sources de rayonnement parasite différentes pour différentes plages spectrales.

**5.** Procédé selon l'une des revendications précédentes,
**caractérisé en ce que**
la dérivation de la luminosité d'image $S_{SP}$ du rayonnement de fond (2) dans au moins une image en positif (A) s'effectue en utilisant au moins l'une des deux méthodes suivantes :

- extrapolation d'au moins une luminosité d'image $S_{SN}$ enregistrée dans au moins une image en négatif (B),
- formation de la valeur moyenne pondérée d'au moins deux luminosités d'image $S_{SNi}$ enregistrées dans au moins une image en négatif (B).

**6.** Dispositif pour supprimer le rayonnement électromagnétique de fond (2) dans une plage spectrale (P) définie par rapport à un signal à détecter, pour la détermination de position d'un point laser (3),

• avec des moyens, pour enregistrer un rayonnement électromagnétique (6), et
• avec des moyens pour le traitement de signal et d'information (7),
les moyens pour enregistrer un rayonnement électromagnétique (6) étant conçus pour enregistrer, de préférence simultanément, au moins une image en positif (A) et au moins une image en négatif (B),
et les moyens pour le traitement de signal et d'information (7) sont conçus de manière que, à partir du contenu différent d'au moins une image en positif (A) et d'au moins une image en négatif (B), adaptée à l'aide des moyens pour le traitement de signal et d'information (7), le rayonnement électromagnétique de fond (2) est supprimé,
**caractérisé en ce que**

- au moins une image en positif (A) monodimensionnelle ou pluridimensionnelle, pour la plage spectrale (P) définie, et
- au moins une image en négatif (B) monodimensionnelle ou pluridimensionnelle, pour au moins une autre plage spectrale (N1, N2), définie et différente de celle de l'image en positif (A),
sont enregistrées à l'aide des moyens pour enregistrer un rayonnement électromagnétique (6),

**caractérisé en ce que**
• les moyens pour enregistrer un rayonnement électromagnétique (6) présentent au moins deux détecteurs pour enregistrer des images (A, B) dans au moins deux plages spectrales (P, N1, N2) définies, et
• les moyens pour le traitement de signal et d'information (7) sont conçus de manière que le rayonnement électromagnétique de fond (2) soit supprimé, sur la base de l'allure,

o directement mesurée et mémorisée pour utilisation dans des conditions répétitives identiques, dans des conditions constantes, ou
o calculée sur la base de modèles physiques,

de la distribution spectrale du rayonnement de fond (2), et la position du point laser (3) dans l'image en positif (A) est extraite en tant que signal à détecter.

**7.** Dispositif selon la revendication 6,
**caractérisé en ce que**

o la plage spectrale des moyens pour enregistrer un rayonnement électromagnétique (6) est limitée à l'aide d'au ions un filtre spectral (6d, 6e) et/ou
o les moyens pour enregistrer un rayonnement électromagnétique (6) présentent au moins un détecteur (6a, 6b), composé de deux matériaux semi-conducteurs ou plus, provoquant un comportement en réaction spectralement sélectif du détecteur (6a, 6b).

**8.** Dispositif selon la revendication 6 ou 7, **caractérisé en ce que** les moyens pour le traitement de signal et d'information (7) sont conçus de manière que la au moins une image en positif (A) et la au moins une image en négatif (B) soient susceptibles d'être mutuellement déplacées en translation et/ou déplacées en rotation et/ou modifiables à une échelle de représentation relative, à l'aide d'un traitement numérique de signal.

**9.** Appareil de mesure, en particulier pour l'arpentage géodésique, **caractérisé en ce que** celui-ci présente un dispositif pour supprimer, de manière spectralement sélective, un rayonnement électromagnétique de fond (2), en particulier pour la détermination de position d'un signal laser (3) à détecter selon l'une des revendications 6 à 8.

**10.** Utilisation d'un dispositif selon l'une des revendications 6 à 8, pour l'identification d'un point laser (3) en tant que marquage pour des processus de mesure subséquents, en particulier pour des mesures de distance par rapport au point marqué.

**11.** Utilisation d'un dispositif selon l'une des revendications 6 à 8, pour l'identification dune source d'un point laser, en particulier pour l'identification d'un laser éclairant une cible (Target Designation).

Fig. 1

*Fig. 2*

1

F1

P

2

F2

N1

$\mathcal{F}ig. \, 3a$

4

1a

$S_P$

$S_L=?$

$a \cdot S_{SN}+b$

$S_{SN}+b$

$S_{SP}$

N1

$\mathcal{F}ig. \, 3b$

1

F3

F4

2

N2        N1

$\mathcal{F}ig.\,4a$

$S_P$

1a

$S_L=?$

4

$S_{SP}\approx S_S$

N2        N1

$S_{SN1}$        $S_{SN2}$

$\mathcal{F}ig.\,4b$

*Fig. 4c*

*Fig. 4d*

$\mathcal{F}ig.\ 5a$

$\mathcal{F}ig.\ 5b$

*Fig. 6*

**EP 1 405 097 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5673082 A
- US 5684531 A
- US 5901236 A